# EUROPEAN PATENT APPLICATION

(11) **EP 3 889 386 A1**
(43) Date of publication of application: **06.10.2021**
(21) Application number: 19916032.6
(22) Date of filing: 29.05.2019
(51) Int. Cl.: E06B 3/96, F16B 39/22, E04H 1/12

(54) **COMPRESSING CONNECTION ASSEMBLY AND COMPOSITE FRAME**

(30) Priority: 22.02.2019 CN 201920233700 U
(71) Applicant: Fujian Xihe Sanitary Ware Technology Co., Ltd., QuanZhou, Fujian 362304 (CN)
(72) Inventor: LIN, Xiaofa, QuanZhou, Fujian 362304 (CN); LIN, Xiaoshan, QuanZhou, Fujian 362304 (CN); SHEN, Youchang, QuanZhou, Fujian 362304 (CN); ZHENG, Pengxing, QuanZhou, Fujian 362304 (CN); DENG, Xiaoqing, QuanZhou, Fujian 362304 (CN)
(74) Representative: Murgitroyd & Company
(86) International application number: PCT/CN2019/089040
(87) International publication number: WO 2020/168651

(57) **Abstract**

A compressing connection assembly and a composite frame, the compressing connection assembly comprises a base (8), a fixing seat (2) and a rotary knob (1); the base (8) is provided thereon with a fixed shaft (5), the fixing seat (2) is movably sheathed on the fixed shaft (5) by means of a shaft hole (18) and can rotate around the fixed shaft (5), the rotary knob (1) is in threaded connection to the fixed shaft (5), and when in a tightened state, the rotary knob (1) can fix the fixing seat (2) onto the base (8). The composite frame comprises a first border (20) and a second border (22) fitted to the first border (20). The compressing connection assembly (21) is mounted on the first border (20). When in a working position, the fixing seat (2) of the compressing connection assembly (21) can be compressed onto the second border (22). The mounting of the borders is convenient and efficient due to the compressing connection assembly.

## Description

### Technical Field

The present disclosure relates to the technical field of shower rooms, in particular to a pressing and connecting assembly and a combined frame.

### Background

At present, the installation of a shower room frame generally employs the way of fixation and connection using screws. However, it is highly difficult to install a shower room frame with screws, the installation is complicated, time-consuming and laborious, and the screw head is easy to become loose during installation. In addition, the disassembly will also be very troublesome when the shower room is maintained or remodeled.

### Summary

The following is a summary of the subject matter described in detail in the present disclosure. This summary is not intended to limit the protection scope of the claims.

The present disclosure provides a pressing and connecting assembly, including: a base, a fixing seat and a rotary knob, the base being provided with a fixed shaft, the fixing seat being movably sleeved on the fixed shaft by means of a shaft hole of the fixing seat and capable of rotating about the fixed shaft, the rotary knob being threadedly connected to the fixed shaft, and the rotary knob being capable of fixing the fixing seat onto the base in a tightened state.

Optionally, the base is a rectangular plate-shaped structure, the fixed shaft is fixedly arranged at a center of a top surface of the base, and the other end of the fixed shaft is provided with a thread.

Optionally, the fixing seat is a rectangular plate-shaped structure, the shaft hole is arranged to penetrate top and bottom surfaces of the fixing seat and is located at one end of the fixing seat, and the other end of the fixing seat is a pressing end.

Optionally, one of the fixing seat and the base is provided with a first engaging block, and the other of the fixing seat and the base is provided with a first engaging groove mated with the first engaging block; and when the fixing seat is in a working position, the position of the first engaging block corresponds to the position of the first engaging groove.

Optionally, the working position is a position where the fixing seat plays a pressing role.

Optionally, the pressing and connecting assembly further includes a torsion spring, the torsion spring is sleeved on the fixed shaft and located in the shaft hole of the fixing seat, and one end of the torsion spring is fixed on the fixing seat and the other end of the torsion spring is fixed on the base.

Optionally, when the fixing seat is in an initial position, the rotary knob fixes the fixing seat on the base, and the torsion spring has a torsional force for rotating the fixing seat to the working position.

Optionally, the component provided with the first engaging groove is further provided with a second engaging groove mated with the first engaging block, and when the fixing seat is in the initial position, the position of the first engaging block corresponds to the position of the second engaging groove.

Optionally, a step is provided in the shaft hole, and when the fixing seat is in the initial position, the torsion spring is in a compressed state, with one end of the torsion spring abutting against the step.

Optionally, the base is further provided with a first limiting block, and when rotating to the working position under the torsional force of the torsion spring, the fixing seat is capable of being blocked by the first limiting block to stop rotating.

Optionally, the base is further provided with a second limiting block, and when rotating to the initial position, the fixing seat is capable of being blocked by the second limiting block to stop rotating.

Optionally, one of the fixing seat and the base provided with the first engaging groove is provided with a second engaging block, and the other is provided with a third engaging groove mated with the second engaging block, and when the fixing seat is in the working position, the position of the second engaging block corresponds to the position of the third engaging groove.

Optionally, the base is provided with a connecting portion for being fixed on an installation member.

Optionally, the connecting portion is a connecting hole provided on the base for receiving a fastener in the connecting hole during installation so as to fix the base on the installation member.

The present disclosure further provides a combined frame, including a first frame member and a second frame member engaged on the first frame member. Any of the above pressing and connecting assemblies is installed on the first frame member, and when in the working position, the fixing seat of the pressing and connecting assembly is capable of being pressed against the second frame member.

Beneficial effects:
According to the pressing and connecting assembly of an embodiment of the present disclosure, the fixing seat can be rotated to a desired position relative to the base by loosening the rotary knob, and can be fixed on the base after the rotary knob is tightened, so that the fixing seat of the pressing and connecting assembly can be pressed against a member to be pressed, and when required, the member to be pressed can be loosened by adjusting the position of the fixing seat.
According to the combined frame of an embodiment of the present disclosure, the second frame member is pressed and fixed on the first frame member by the pressing and connecting assembly, so that the traditional connection method of connecting and fixing frame members by screws is abandoned, thereby making the installation convenient and quick.

### Brief Description of Drawings

The accompanying drawings are used to provide a further understanding of the technical schemes of the present disclosure and form a part of the specification. Together with the embodiments of the present disclosure, they are used to explain the technical schemes of the present disclosure and do not constitute a limitation on the technical schemes of the present disclosure.
FIG. 1 is an exploded view of a pressing and connecting assembly according to an embodiment of the present disclosure.
FIG. 2 is an exploded view of a pressing and connecting assembly according to an embodiment of the present disclosure from another angle of view.
FIG. 3 is a schematic view of a three-dimensional structure of a pressing and connecting assembly according to an embodiment of the present disclosure in an initial position.
FIG. 4 is a schematic view of a three-dimensional structure of a pressing and connecting assembly according to an embodiment of the present disclosure in the initial position from another angle of view.
FIG. 5 is a top view of a pressing and connecting assembly according to an embodiment of the present disclosure in the initial position.
FIG. 6 is a sectional view taken at A-A in FIG. 5.
FIG. 7 is a sectional view taken at C-C in FIG. 5.
FIG. 8 is a schematic view of a three-dimensional structure of a pressing and connecting assembly according to an embodiment of the present disclosure, with its fixing seat rotating to a working position.
FIG. 9 is a sectional view of the pressing and connecting assembly in the state shown in FIG. 8.
FIG. 10 is a schematic view of a three-dimensional structure of a pressing and connecting assembly according to an embodiment of the present disclosure, with its fixing seat in a working state in the working position.
FIG. 11 is a sectional view of the pressing and connecting assembly in the working state shown in FIG. 10.
FIG. 12 is a partial exploded view of a combined frame according to another embodiment of the present disclosure.
FIG. 13 is a schematic structural view of a combined frame according to another embodiment of the present disclosure in a use state.

Reference signs: 1- rotary knob, 2- fixing seat, 3- first fixing hole, 4- thread, 5- fixed shaft, 6- fastener, 7- second limiting block, 8- base, 9- connecting hole, 10- first engaging groove, 11-second engaging block, 12- second fixing hole, 13- second engaging groove, 14- first limiting block, 15- torsion spring, 16- first engaging block, 17- third engaging groove, 18- shaft hole, 19- step, 20- first frame member, 21- pressing and connecting assembly, 22- second frame member.

### Detailed Description

The technical schemes of the present disclosure will be further described below with reference to the drawings and specific embodiments. It may be understood that the specific embodiments described herein are only used to explain the present disclosure, rather than limit the present disclosure.

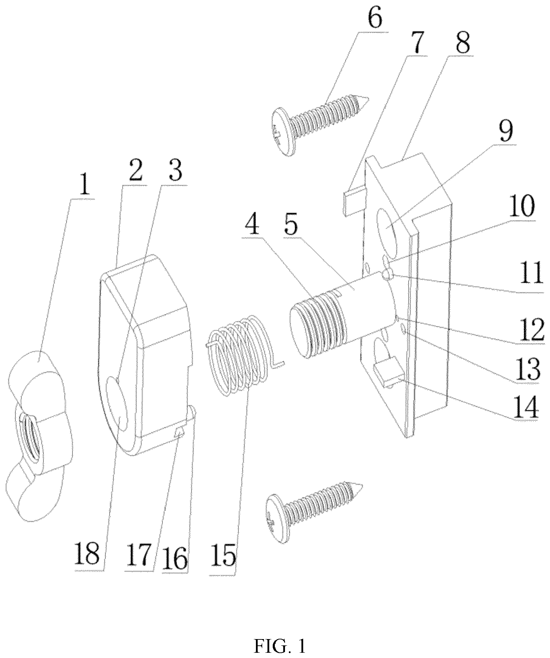

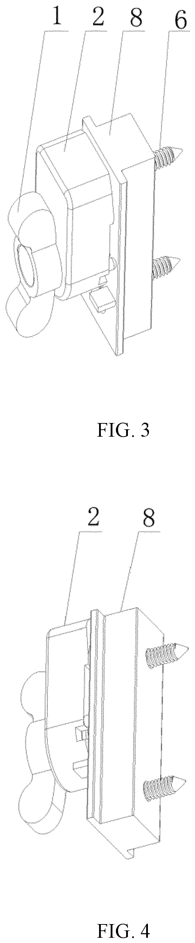

As shown in FIGS. 1-4, an embodiment of the present disclosure provides a pressing and connecting assembly, including a base 8, a fixing seat 2 and a rotary knob 1. The base 8 is provided with a fixed shaft 5. The fixing seat 2 is movably sleeved on the fixed shaft 5 by means of a shaft hole 18 of the fixing seat 2 and capable of rotating about the fixed shaft 5. The rotary knob 1 is threadedly connected to the fixed shaft 5, and when in a tightened state, the rotary knob 1 is capable of fixing the fixing seat 2 onto the base 8.

When the pressing and connecting assembly of an embodiment of the present disclosure is in use, the base 8 may be installed on a first connecting member. The rotating position of the fixing seat 2 of the pressing and connecting assembly relative to the base 8 may be adjusted by loosening the rotary knob 1, and then the fixing seat 2 is fixed in position by tightening the rotary knob 1, so that a second connecting member engaged on the first connecting member can be pressed by the fixing seat 2, thus achieving the effect of pressing and connecting the first connecting member and the second connecting member. The pressing and connecting assembly of an embodiment of the present disclosure can be applied for the assembly and fixation of a shower room frame.

In this embodiment, the base 8 may have a rectangular plate-shaped structure as a whole, the fixed shaft 5 may be fixedly disposed at the center of the top surface of the base 8, and the other end of the fixed shaft 5 is provided with a thread 4. The fixing seat 2 is also of a rectangular plate-shaped structure as a whole, one end surface of which may be provided as a cambered structure. The shaft hole 18 is provided to penetrate the top and bottom surfaces of the fixing seat 2 and is located at one end of the fixing seat 2, for example, at the cambered structure. The other end of the fixing seat 2 is a pressing end. The fixing seat 2 is movably sleeved on the fixed shaft 5 through the shaft hole 18 of the fixing seat 2. Thus, the fixing seat 2 can rotate about the fixed shaft 5 relative to the base 8. The rotary knob 1 is tightened on an end of the fixed shaft 5 away from the base 8 and presses the fixing seat 2 against the top surface of the base 8. The rotating position of the fixing seat 2 relative to the base 8 can be adjusted by loosening the rotary knob 1. When the fixing seat 2 is in a working position, a length direction of the fixing seat 2 may be perpendicular to a length direction of the base 8. At this time, the pressing end of the fixing seat 2 protrudes from the top surface of the base 8 and is used for pressing against a member to be pressed.

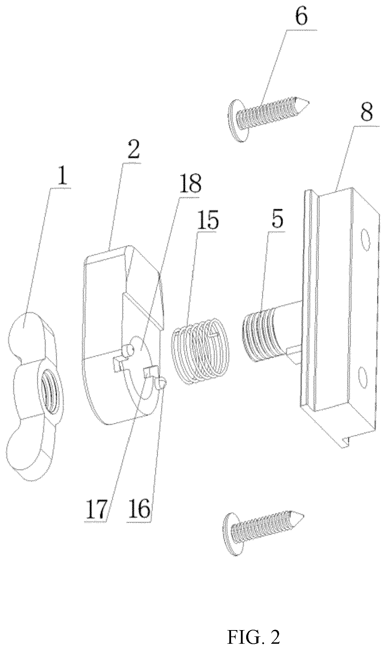

In order to make the fixing of the fixing seat 2 in the working position firmer, as an implementation, one of the fixing seat 2 and the base 8 is provided with a first engaging block 16, and the other of the fixing seat 2 and the base 8 is provided with a first engaging groove 10 mated with the first engaging block 16. When the fixing seat 2 is in the working position, the position of the first engaging block 16 corresponds to the position of the first engaging groove 10. For example, the first engaging block 16 is provided on the fixing seat 2, and the first engaging groove 10 is provided on the base 8. The first engaging block 16 may be provided on the bottom surface of the fixing seat 2. Two first engaging blocks 16 may be provided, and correspondingly, two first engaging grooves 10 are provided. The two first engaging blocks 16 may be located on both sides of the shaft hole 18, respectively. The first engaging block 16 may be a cylindrical structure. The two first engaging grooves 10 are provided on the top surface of the base 8 and are located on both sides of the fixed shaft 5, respectively, in the length direction of the base 8. When the rotary knob 1 is loosened to rotate the fixing seat 2 to the working position (the working position refers to the position where the fixing seat 2 plays a pressing role), tightening the rotary knob 1 can engage the first engaging block 16 in the first engaging groove 10, playing the role of limiting the movement of the fixing seat 2 relative to the base 8, thus making the fixing firmer. One or more first engaging blocks 16 may be provided as required, and correspondingly, the same number of the first engaging grooves 10 as the first engaging blocks 16 are provided. As shown in FIGS. 1 and 2, there are two first engaging blocks 16 and two first engaging grooves 10. In the present disclosure, the working position refers to the position where the fixing seat 2 plays a pressing role.

As shown in FIGS. 1-7, in this embodiment, the pressing and connecting assembly further includes a torsion spring 15. The torsion spring 15 is sleeved on the fixed shaft 5 and located in the shaft hole 18 of the fixing seat 2. One end of the torsion spring 15 is fixed on the fixing seat 2 and the other end of the torsion spring 15 is fixed on the base 8.

When the fixing seat 2 is in the initial position, the rotary knob 1 fixes the fixing seat 2 on the base 8, and the torsion spring 15 has a torsional force for rotating the fixing seat 2 to the working position. The direction of the torsional force may be a clockwise direction or a counterclockwise direction. Alternatively, when the fixing seat 2 is in the initial position, the torsion spring 15 can also be configured to have no torsional force, and after the rotary knob 1 is loosened, the fixing seat 2 can be manually rotated to the working position.

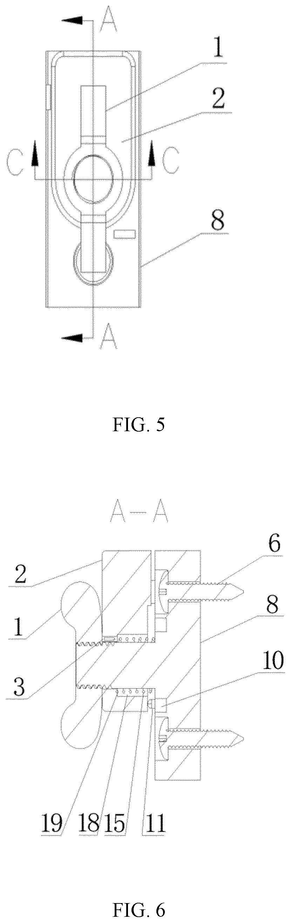

As an implementation, in this embodiment, as shown in FIGS. 5-7, when in the initial position, under the pressing action of the rotary knob 1, the fixing seat 2 is fixed, and the torsion spring 15 is pre-loaded with a certain clockwise torsional force during installation. When the rotary knob 1 is loosened, the fixing seat 2 is rotated clockwise relative to the base 8 to the working position under the torsional force of the torsion spring 15, and then the rotary knob 1 is tightened to fix the fixing seat 2 on the base 8.

In the initial position, as the torsion spring 15 has a certain torsional force, in order to ensure that the fixing seat 2 is fixed, the rotary knob 1 is needed to exert a relatively large pressing force. In order to reduce the pressing force exerted by the rotary knob 1 and make the fixing seat 2 firmly fixed, as an implementation, the component provided with the first engaging groove 10 is further provided with a second engaging groove 13 mated with the first engaging block 16, and when the fixing seat 2 is in the initial position, the position of the first engaging block 16 corresponds to the position of the second engaging groove 13. In this way, in the initial position, tightening the rotary knob 1 can engage the first engaging block 16 in the second engaging groove 13, and the first engaging block 16 cooperates with the second engaging groove 13 to further limit the rotation of the fixing seat 2 relative to the base 8. The number of second engaging grooves 13 may be set the same as the number of first engaging blocks 16. As shown in FIGS. 1 and 2, there are two first engaging blocks 16 and two second engaging grooves 13. The two second engaging grooves 13 are arranged on the top surface of the base 8 and are respectively located on both sides of the fixed shaft 5 in a width direction of the base 8.

In the initial position, after the rotary knob 1 is loosened, in order to facilitate the first engaging block 16 to disengage from the second engaging groove 13 to enable the fixing seat 2 to rotate to the working position, a step 19 is provided in the shaft hole 18. When the fixing seat 2 is in the initial position, the torsion spring 15 is in the compressed state, with one end abutting against the step 19. In this embodiment, since the torsion spring 15 is in the compressed state, after the rotary knob 1 is loosened, the elastic force of the torsion spring 15 can cause the first engaging block 16 to eject out of the second engaging groove 13, and then under the action of the torsional force of the torsion spring 15, the fixing seat 2 rotates to the working position. In this embodiment, one end surface of the torsion spring 15 abuts against the step 19, and the other end surface of the torsion spring 15 abuts against the fixing seat 2. An end leg of one end of the torsion spring 15 is clamped and fixed in a first fixing hole 3 provided on the fixing seat 2, and the end leg of the other end of the torsion spring 15 is clamped and fixed in a second fixing hole 12 provided on the base 8.

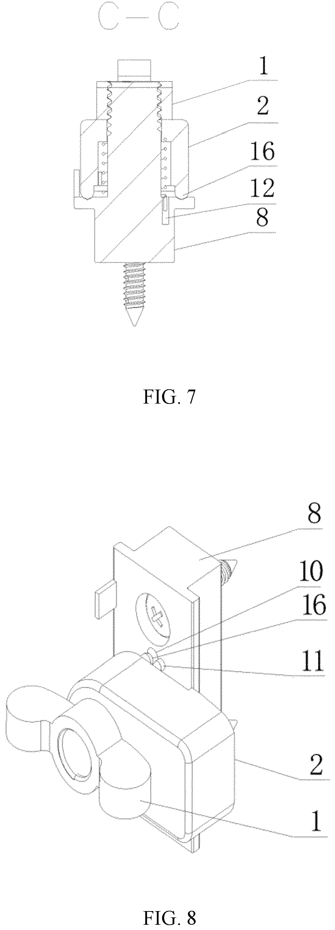

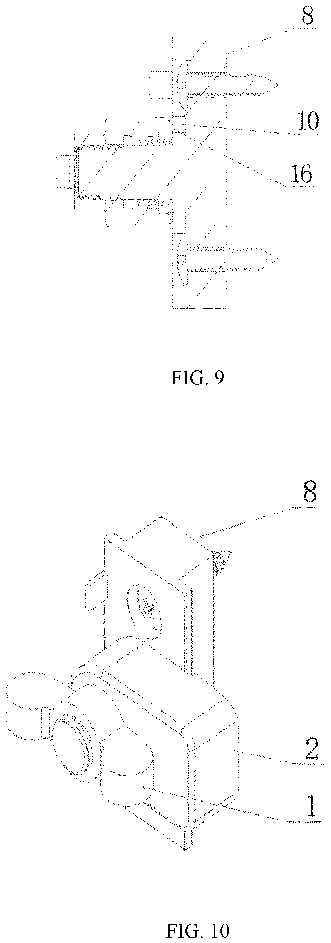

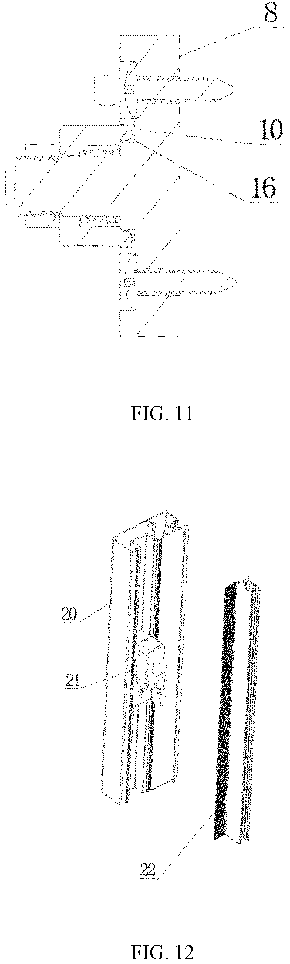

As shown in FIGS. 1 and 2, in order to enable the fixing seat 2 to stop rotating after rotating to the working position, the base 8 is further provided with a first limiting block 14. When rotating to the working position under the torsional force of the torsion spring 15, the fixing seat 2 can be blocked by the first limiting block 14 to stop rotating. The fixing seat 2 is accurately limited in the working position by providing the first limiting block 14, so that when the fixing seat 2 is stopped in the working position by the first limiting block 14, the position of the first engaging block 16 exactly corresponds to the position of the first engaging groove 10, as shown in FIGS. 8 and 9. The rotary knob 1 is then tightened, and the first engaging block 16 can just be engaged in the first engaging groove 10, as shown in FIGS. 10 and 11. The first limiting block 14 may be disposed on the top surface of the base 8.

When the fixing seat 2 needs to be loosened, the rotary knob 1 can be loosened to move the fixing seat 2 back to the initial position, and then the rotary knob 1 is tightened. In order that the position of the first engaging block 16 and the position of the second engaging groove 13 exactly correspond to each other when the fixing seat 2 is moved back to the initial position, the base 8 is further provided with a second limiting block 7. When rotating counterclockwise to the initial position under the action of manual operation, the fixing seat 2 can be blocked by the second limiting block 7 to stop rotating. In this way, when the fixing seat 2 is stopped in the initial position by the second limiting block 7, the position of the first engaging block 16 just corresponds to the position of the second engaging groove 13, and the first engaging block 16 is engaged in the second engaging groove 13 when the rotary knob 1 is tightened. The second limiting block 7 may be disposed on the top surface of the base 8.

In order to make the fixing of the fixing seat 2 in the working position firmer, one of the fixing seat 2 and the base 8 provided with the first engaging groove 10 is provided with a second engaging block 11, and the other is provided with a third engaging groove 17 mated with the second engaging block 11. When the fixing seat 2 is in the working position, the position of the second engaging block 11 corresponds to the position of the third engaging groove 17. In this way, when the fixing seat 2 rotates to the working position, the first engaging block 16 can be just engaged in the first engaging groove 10 by tightening the rotary knob 1, and at the same time, the second engaging block 11 can also be engaged in the third engaging groove 17. The second engaging block 11 may be disposed on the top surface of the base 8, and the third engaging groove 17 may be disposed on the bottom surface of the fixing seat 2.

According to the pressing and connecting assembly of an embodiment of the present disclosure, the base 8 is provided with a connecting portion for being fixed on an installation member. When the pressing and connecting assembly is in use, the base 8 is installed on the installation member, and the fixing seat 2 is used to press a member to be pressed which is provided on the installation member. The connecting portion may be a plurality of connecting holes 9 arranged on the base 8, and fasteners 6 are arranged in the connecting holes 9 during installation so as to fix the base 8 of the pressing and connecting assembly on the installation member. The connecting holes 9 may be screw holes, and two screw holes may be provided, which are respectively located at both ends of the top surface of the base 8. The fasteners 6 may be screws for facilitating disassembly.

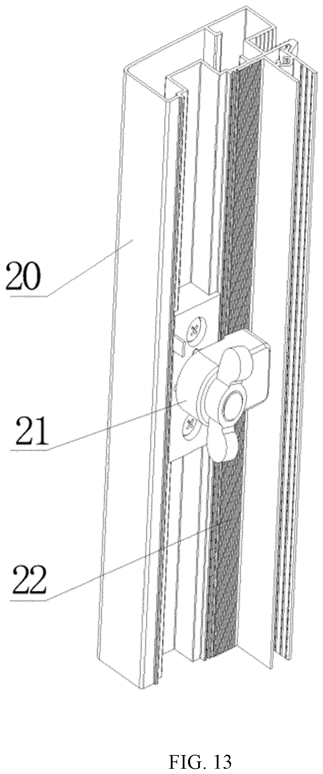

As shown in FIGS. 12 and 13, another embodiment of the present disclosure provides a combined frame, including a first frame member 20 and a second frame member 22 engaged on the first frame member 20. The pressing and connecting assembly 21 in any of embodiments of the present disclosure is installed on the first frame member 20, and the fixing seat 2 of the pressing and connecting assembly 21 can be pressed against the second frame member 22 when in the working position.

The combined frame of this embodiment can be used for a shower room frame or other frames. For example, the first frame member 20 is an aluminum side profile of the shower room frame, and the second frame member 22 is a combined aluminum profile. When leaving the factory, the pressing and connecting assembly 21 can be pre-installed on the first frame member 20, and the fixing seat 2 of the pressing and connecting assembly 21 can be located in the initial position. At this time, the length direction of the fixing seat 2 can be parallel to the length direction of the base 8, which can save space and facilitate transportation. In use, the second frame member 22 can be engaged on the first frame member 20 first, and then the fixing seat 2 can be adjusted to rotate to the working position, so that the fixing seat 2 is pressed against the second frame member 22, thus achieving the effect of connecting and fixing the first frame member 20 and the second frame member 22.

According to the combined frame of an embodiment of the present disclosure, the second frame member 22 is pressed and fixed on the first frame member 20 by the pressing and connecting assembly 21, so that the traditional connection method of connecting and fixing frame members by screws is abandoned, thereby making the installation convenient and quick.

In the description of the embodiments of the present disclosure, it should be noted that the orientation or position relationships indicated by the terms "upper", "lower", "left", "right", "top", "inner", "outer", "axial" and "four corners" or the like are based on the orientation or position relationships shown in the drawings, which are only for convenience of describing the embodiments of the present disclosure and simplifying the description, rather than indicating or implying that the structure referred has the specific orientation, is constructed and operated in the specific orientation, and thus cannot be interpreted as a limitation on the present disclosure.

In the description of the embodiments of the present disclosure, unless otherwise explicitly specified and limited, the terms "connection", "fixed connection", "installation" and "assembly" should be understood in a broad sense, for example, they may be fixed connection, detachable connection or integrated connection; and the terms "mounting", "connection" and "fixed connection" may be direct connection, or indirect connection through an intermediary, or an internal communication between two elements. Those of ordinary skills in the art can understand the specific meanings of the above terms in the embodiments of the present disclosure according to specific situations.

## Claims

1. A pressing and connecting assembly, comprising: a base, a fixing seat and a rotary knob, the base being provided with a fixed shaft, the fixing seat being movably sleeved on the fixed shaft by means of a shaft hole of the fixing seat and capable of rotating about the fixed shaft, the rotary knob being threadedly connected to the fixed shaft, and the rotary knob being capable of fixing the fixing seat onto the base in a tightened state.

2. The pressing and connecting assembly according to claim 1, wherein the base is a rectangular plate-shaped structure, the fixed shaft is fixedly arranged at a center of a top surface of the base, and the other end of the fixed shaft is provided with a thread.

3. The pressing and connecting assembly according to claim 1, wherein the fixing seat is a rectangular plate-shaped structure, the shaft hole is arranged to penetrate a top surface and a bottom surface of the fixing seat and is located at one end of the fixing seat, and the other end of the fixing seat is a pressing end.

4. The pressing and connecting assembly according to claim 1, wherein one of the fixing seat and the base is provided with a first engaging block, and the other of the fixing seat and the base is provided with a first engaging groove mated with the first engaging block; and when the fixing seat is in a working position, the position of the first engaging block corresponds to the position of the first engaging groove.

5. The pressing and connecting assembly according to claim 4, wherein the working position is a position where the fixing seat plays a pressing role.

6. The pressing and connecting assembly according to claim 4, wherein the pressing and connecting assembly further comprises a torsion spring, the torsion spring is sleeved on the fixed shaft and located in the shaft hole of the fixing seat, and one end of the torsion spring is fixed on the fixing seat and the other end of the torsion spring is fixed on the base.

7. The pressing and connecting assembly according to claim 6, wherein when the fixing seat is in an initial position, the rotary knob fixes the fixing seat on the base, and the torsion spring has a torsional force for rotating the fixing seat to the working position.

8. The pressing and connecting assembly according to claim 7, wherein the component provided with the first engaging groove is further provided with a second engaging groove mated with the first engaging block, and when the fixing seat is in the initial position, the position of the first engaging block corresponds to the position of the second engaging groove.

9. The pressing and connecting assembly according to claim 7, wherein a step is provided in the shaft hole, and when the fixing seat is in the initial position, the torsion spring is in a compressed state, with one end of the torsion spring abutting against the step.

10. The pressing and connecting assembly according to claim 7, wherein the base is further provided with a first limiting block, and when rotating to the working position under the torsional force of the torsion spring, the fixing seat is capable of being blocked by the first limiting block to stop rotating.

11. The pressing and connecting assembly according to claim 7, wherein the base is further provided with a second limiting block, and when rotating to the initial position, the fixing seat is capable of being blocked by the second limiting block to stop rotating.

12. The pressing and connecting assembly according to claim 4, wherein one of the fixing seat and the base provided with the first engaging groove is provided with a second engaging block, and the other is provided with a third engaging groove mated with the second engaging block, and when the fixing seat is in the working position, the position of the second engaging block corresponds to the position of the third engaging groove.

13. The pressing and connecting assembly according to any one of claims 1-12, wherein the base is provided with a connecting portion for being fixed on an installation member.

14. The pressing and connecting assembly according to claim 13, wherein the connecting portion is a connecting hole provided on the base for receiving a fastener in the connecting hole during installation so as to fix the base on the installation member.

15. A combined frame, comprising a first frame member and a second frame member engaged on the first frame member, wherein the pressing and connecting assembly according to any one of claims 1-13 is installed on the first frame member, and when in a working position, the fixing seat of the pressing and connecting assembly is capable of being pressed against the second frame member.
